# EUROPEAN PATENT SPECIFICATION

(11) **EP 2 204 620 B1**
(45) Date of publication and mention of the grant of the patent: **23.05.2012**
(21) Application number: 10157160.2
(22) Date of filing: 20.03.2008
(51) Int. Cl.: F24D 19/10, G01F 1/50, G05D 7/00, F25B 47/02, F25B 47/00

(54) **Heating and/or cooling installation and method for monitoring the operability of the installation**
Heizende und/oder kühlende Installation und Verfahren zur Überwachung der Betriebsbereitschaft der Installation
Installation de refroidissement et/ou de chauffage et procédé pour surveiller le fonctionnement de l'installation

(43) Date of publication of application: 07.07.2010
(62) Divisional of application: 08005303.6
(73) Proprietor: Daikin Industries, Ltd., Osaka-shi, Osaka 530-8323 (JP); Daikin Europe N.V., 8400 Oostende (BE)
(72) Inventor: Ochi, Hiroki, Osaka 591-8511 (JP); Kataoka, Hidehiko, Kusatsu Shiga 525-8526 (JP)
(74) Representative: HOFFMANN EITLE

(56) References cited:
- DE-A1- 4 242 630
- US-A- 4 945 942

## Description

### Field of the invention

The present invention relates to a heating and/or cooling installation having the features defined in the preamble of claim 1 and comprising a fluid circuit, a pump circulating fluid in the fluid circuit and a flow switch connected to the fluid circuit for detecting a flow condition of the circulated fluid such as the flow rate. Further, the present invention relates to a method for detecting a malfunction of the installation having the features defined in the preamble of claim 5. Such installation and method are known from US-A-4,945,942.

### Background of the invention

In heating installations heat is transferred to a fluid circulated in a fluid circuit (fluid loop). In order to prevent freezing up of for example a heat exchanger during a defrosting operation of a heat-pump or in order to detect and indicate a malfunction of the installation, existing systems make use of a flow switch connected to the fluid circuit for detecting a flow condition of the circulated fluid such as the flow rate. The flow switch may be one of various safety features of such an installation, but is considered as one of the more important ones. If the flow switch value differs from a predetermined value (nominal flow) the control of the installation concludes on a malfunction outputting a warning signal and/or shutting down the system.

Yet, if the flow switch has a malfunction either the installation is unnecessarily shut down or the malfunction of the installation is not detected, both being considered inferior.

### Summary of the invention

Accordingly, the present invention has been made to solve the problem to provide a heating and/or cooling installation which in view of the aforesaid is improved in regard of safety and to provide a method that may be implemented in such an installation in an easy and cost effective manner.

This problem is solved by a heating and/or cooling installation as defined in claim 1 and a method as defined in claim 5.

The basic principle of the present invention is to not only detect the flow condition of the circulated fluid by means of at least one flow switch to monitor the operability of the installation but to also monitor the operability of the flow switch itself.

Accordingly, the heating and/or cooling installation of the present invention comprises a fluid circuit, a pump circulating fluid in the fluid circuit, wherein the fluid is used for either heating or cooling depending on the installation or mode, and a flow switch connected to the fluid circuit for detecting a flow condition of the circulated fluid. The detected flow condition is used as a safety feature, wherein the detected actual flow condition is compared with a predetermined flow condition. For example, if the predetermined flow condition and the actual flow condition do not match, a control of the installation concludes on a malfunction and intervenes in the operation (e.g. emergency shut off) and/or indicates a malfunction. This control according to the present invention is configured to monitor the operability of the flow switch and, hence, monitors whether the flow switch has a malfunction or not. If a malfunction is detected the control may output a signal to indicate the malfunction. The signal may be visually or acoustically.

Preferably, the control is configured to compare an output of the flow switch with a predetermined value and to determine based on the comparison whether the flow switch is operative.

As previously indicated, the output of the flow switch is compared with a predetermined value corresponding to the nominal flow to be obtained in the fluid circuit at the position of the flow switch, i.e. during operation of the pump. After the pump is started, the fluid begins to circulate with an increasing flow rate until the nominal flow is obtained. In order to prevent the control to conclude on a malfunction of the system the comparison is started with a time delay equal to or longer than the time the fluid needs to obtain the nominal flow. The time until the nominal flow is reached, however, strongly depends on the used fluid. For example, if the system is used in low fluid temperature applications a brine solution is used as fluid. A brine solution can also be used as anti-freeze protection in case a heating and/or cooling installation is used which is installed outdoors. In other applications pure water may be used as brine solution has a higher viscosity than pure water. As a result, the nominal flow cannot be reached as early as in case pure water is used as fluid. Hence, according to the present invention providing a more reliable installation independently of the used fluid, the installation of the present invention further comprises a temperature sensor measuring the temperature of the fluid in the fluid circuit, preferably at a position where the lowest temperature of the fluid is to be expected. The control in this embodiment is configured to start the conclusion on the operability of the installation with a time delay after the pump is started, wherein the time delay is established based on the measured fluid temperature.

Hence, if the pump is stopped and if the installation is used in low fluid temperature applications such as cooling installations for industrial cooling processes. The fluid temperature will expectedly have a temperature below approximately 7. 5°C. In this case the control concludes that the used fluid is a fluid with a higher viscosity, e.g. a brine solution, and sets a time delay between 15 and 60 sec., depending on the fluid temperature (longer than in the below case) which is the time needed for such a fluid to achieve the nominal flow or longer. In case the fluid temperature is above approximately 7.5°C, the control concludes that e.g. pure water is used having a lower viscosity and achieving the nominal flow earlier so that the time delay is set between 13 and 17 sec., preferably approximately 15 sec. Therefore, the installation of this embodiment may be incorporated in installations independently of the installation being used in low or higher fluid temperature conditions.

Preferably, the flow condition is the flow rate which in an example may reside inbetween 5 to 20 1/min (e.g. 7 1/min for small units and 17 1/min for larger units).

Beside the heating and/or cooling installation explained above, the present invention also provides a method for monitoring the operability of the installation and of a flow switch in such an installation comprising the steps of comparing an output of the flow switch with a predetermined value and alternatively determining based on the comparison whether the installation and the flow switch are operative.

In this method, the embodiment explained with respect to the installation may be implemented, i.e. that the comparison is to be performed in the operation state started with the said time delay, i.e. if a nominal flow is to be detected, to monitor operability of the installation, the time delay being established based on the measured fluid temperature. In this context, reference is made to the corresponding description of the installation to avoid repetitions.

### Brief description of the drawings

Further advantages and features of the present invention will become apparent from the following description of a preferred embodiment with reference to the accompanying drawings, in which:
Fig. 1 is a perspective view of a heating and cooling installation in which the present invention may be implemented;
Fig. 2 is a system diagram for schematically explaining the components of the installation shown in Fig. 1;

### Preferred embodiment

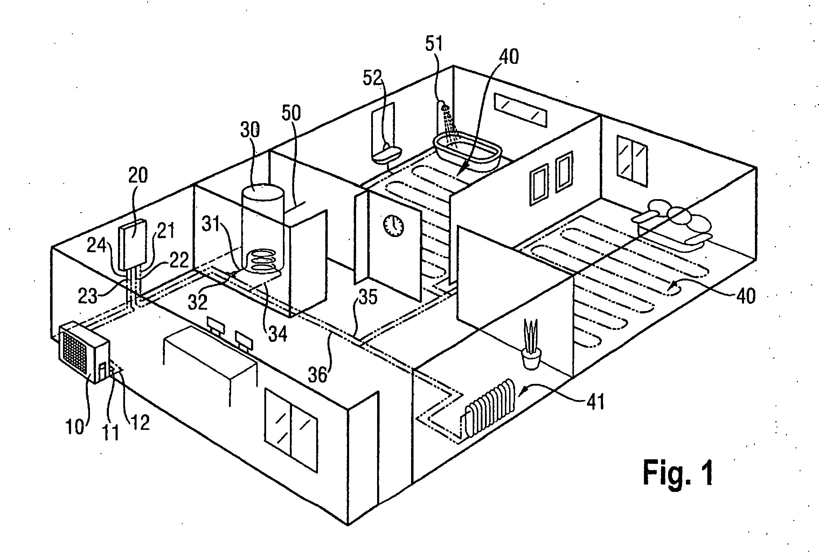

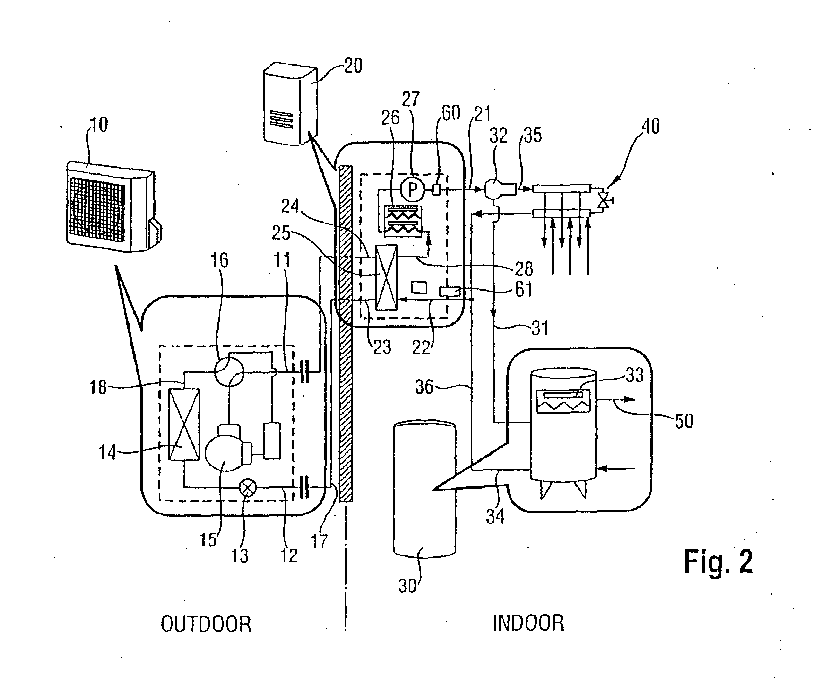

The present application will be described in the following as being implemented in an installation which is capable of heating and cooling a predetermined space (room) and heating water in a hot water tank, the water being supplied by a piping 50 and used for sanitary purposes like the tabs 52, the shower 51, etc. (see Fig. 1). Yet it is to be understood that the present invention may also be implemented in other installations than the one shown in Figs. 1 and 2, where appropriate.

The installation shown in Fig. 1 consists of three major components, an outdoor unit 10, an indoor unit 20 and a hot water tank 30. The outdoor unit 10 is connected to a piping 11, 12 which connects the outdoor unit 10 to the indoor unit 20. The outdoor unit 10 comprises an inlet/outlet 12 and an outlet/inlet 11 for a refrigerant piping. The indoor unit 20 comprises an inlet/outlet 24 and an outlet/inlet 23 for the refrigerant piping. In addition, the indoor unit has an outlet 21 and an inlet 22 for the fluid to be circulated in the fluid circuit (depending on the mode the fluid is heating or cooling fluid). The fluid may be water or a brine solution. The piping downstream of the outlet 21 is connected via a valve 32 to a piping 31 and a piping 35. The piping 31 passes through the interior of the hot water tank 30 in form of a coil (see Fig. 1) and leaves the hot water tank 30 via a piping 34 connected to a piping 36 leading to the inlet 22. The piping 35 downstream of the valve 32 leads to a heat emitter 41 and/or underfloor heating loops 40 and then is refed to the indoor unit via the piping 36 and the inlet 22.

As will be appreciated, the connections 11, 12 to the outdoor unit 10 and the connections 23, 24 to the indoor unit may respectively be reversed depending on the mode in which the system is operated, i.e. the heating mode or the cooling mode.

As shown in Fig. 2 the outdoor unit comprises an evaporator and/or condenser 14, a four-way valve 16, a compressor 15 and an expansion device 13, which is may be an electric valve or a capillary. The indoor unit 20 inter alia comprises a condenser/evaporator 25. These components form a heat pump. Hence, the evaporator/condenser 14, the compressor 15, the condenser/evaporator 25 and the expansion means 13 are connected in this order in a cycle or loop by means of a refrigerant piping 17, 18. A refrigerant is circulated by means of the compressor 15 in the refrigerant piping 17, 18. In the heating mode the refrigerant circulates clockwise in Fig. 2. Hence, the refrigerant leaving the condenser 25 and having a first temperature T₁ upstream of the expansion means 13 passes the expansion means 13, the pressure being reduced. Afterwards, the refrigerant passes the evaporator 14 and is evaporated having a second temperature T₂ downstream of the evaporator 14 higher than the first temperature. After leaving the evaporator 14, the refrigerant passes through the compressor, the pressure being increased. Finally, the refrigerant is again condensed to the first temperature T₁ in the condenser 25, wherein the heat from the refrigerant is transferred to the water or brine solution (fluid) in the piping connected to the indoor unit via the connections (inlet 22 and outlet 21.

In the cooling mode, this process is reversed, wherein the component 14 then serves as condenser and the component 25 as evaporator. The refrigerant then circulates counter-clockwise in Fig. 2.

The indoor unit 20 further comprises a pump 27 and a backup heater 26. The pump serves for circulating the fluid (heating or cooling fluid) in the fluid circuit (21, 31, 34, 35, 36, 22). The purpose of the backup heater 26 is to cope with situations in which the heat pump described above is not capable to satisfy the entire heating demand (at very low temperatures, e.g. below -10°C). This backup heater 26 in some cases may also be omitted.

In the heating mode the fluid (heating fluid) enters the indoor unit 20 through the inlet 22, passes the condenser 25, wherein heat is transferred from the refrigerant to the fluid, then flows through the backup heater 26 in which the fluid may be additionally heated if necessary and subsequently passes the pump 27 which circulates the fluid in the fluid circuit. Afterwards and by controlling the valve 32 the fluid is either supplied to the floor heating loops 40 and the heat emitter 41 (see Fig. 1) or alternatively to the hot water tank piping (31, 34). In the latter case, the fluid may enter the hot water tank 30 by means of the piping 31 passing the heating coil inside the hot water tank 30 thereby transferring the heat from the fluid to the water contained in the hot water tank 30 and subsequently being refed to the circuit by the pipings 34 and 36 finally being reintroduced into the indoor unit via the inlet 22. Similar, the fluid may also be supplied to the floor heating loops 40 as a heat emitter or the radiator 41 shown in Fig. 1 and subsequently be reintroduced in to the indoor unit via the inlet 22. In case the temperature of the fluid is not sufficient to heat the hot water in the hot water tank an additional (booster) heater 33 may be provided in the hot water tank.

As previously mentioned, the circulation of the fluid in the cooling mode is the same but the cycle of the heat pump (flow direction of the refrigerant) is reversed.

The system further comprises at least one flow switch 60 in the fluid circuit formed by the pipings 21, 31, 34, 35, 36 and 22. In the present embodiment the flow switch 60 is located downstream of the backup heater 26. The flow switch 60, however, may be positioned anywhere in the fluid circuit or a plurality of flow switches may be provided in the fluid circuit at various positions.

In the following, the control of the flow switch is explained in more detail.

In normal operation of the installation (pump 27 is operative) the flow switch 60 detects a flow condition such as the flow rate of the fluid circulating in the fluid circuit. The detected flow condition is compared with the nominal flow rate set in the system, for example 7 l/min or 17 l/min, depending on the size of the installation. If the detected value corresponds to (equals) the set value, the control concludes to a correct operation of the installation. In case the detected value does not match the set value, i.e. is lower or higher, the control initiates a safety measure such as indicating a malfunction of the installation or shutting down the system (second monitoring mode).

The control of the present invention additionally has a monitoring function.

In the monitoring function (operability of installation), the control compares an output of the flow switch, i.e. the detected flow rate with a predetermined value and determines based on the comparison whether the installation is operative or whether a malfunction has occurred.

In the monitoring mode, the predetermined value is the nominal flow of the fluid in the fluid circuit set in the system, i.e. the nominal flow which is to be achieved by the fluid (pump 27) in normal operation. If the value detected by the flow switch 60 equals the set value (nominal flow) the control concludes on a correct operation of the installation. In case there is a difference between the values a safety measure is activated, i.e. a warning signal (visual and/or acoustic signal) and/or the installation is shut off.

Because the nominal flow of the fluid in the fluid circuit is achieved only a certain time after the pump has been activated, i.e. after the pump has been started, this second monitoring mode is started with a time delay after the pump is started in order to prevent the control to conclude on a malfunction although there is none. This time delay, however, depends on the fluid used. In other words, the viscosity of the fluid influences the time delay in that a fluid with a higher velocity reaches the nominal flow later than a fluid with a lower viscosity. In order to implement the shown installation independent of the fluid used in the installation, the installation further comprises a temperature sensor 61 for detecting the temperature of the fluid in the fluid circuit. This temperature sensor, though being shown upstream of the condenser 25 may be located at any position in the installation. In addition, more than one such temperature sensor may be provided. The viscosity is influenced by the water temperature and also by any additives to the fluid. In particular in low fluid temperature conditions, the fluid used in the installation will be a brine solution. A brine solution compared to pure water, however, has a higher viscosity. In contrast to pure water, a brine solution may adopt a water temperature of less than 3° without formation of ice, i.e. becoming solid. Therefore, if the temperature sensor 61 detects a temperature at approximately 7.5°C, the control concludes on a fluid with a higher viscosity and sets a time delay of e.g. 15-60 seconds. In turn, if the detected temperature is above 7.5°C, the control concludes on a fluid with a lower viscosity and sets a time delay of e.g. 15 seconds, i.e. shorter than the aforesaid time delay. Further, even the detected temperature is above 7.5°C because of e.g. hot weather conditions, but the used fluid is a brine solution, the control has set a time delay of 15 sec., although a brine solution is used. This shorter time delay, however, in this case is also suitable for the brine solution because the viscosity of the brine solution decreases with an increasing temperature so that the nominal flow of the brine solution is reached within 10 sec. when the temperature is above 7.5°C.

It is to be understood that the present invention may be implemented in a heating or cooling installation as well as in the combined heating and cooling installation described with respect to Figs. 1 and 2. In addition, the present invention may comprise more than the one flow switch described and more than one temperature sensor measuring the temperature of the fluid in the fluid circuit. In addition, if more than one flow switch 60 is provided, the control may additionally be configured to monitor the operability of the flow switches by comparing the values of the flow switches and if these values differ conclude on a malfunction of at least one of the flow switches. However, this is only optional.

## Claims

1. A heating and/or cooling installation comprising:
a fluid circuit (21, 22, 31, 34, 40),
a pump (27) circulating fluid in the fluid circuit, a flow switch (60) connected to the fluid circuit for detecting a flow condition of the circulated fluid,
a control configured to use the detected flow condition as a basis for concluding on the operability of the installation, and
a temperature sensor (61) for measuring the temperature of the fluid in the fluid circuit **characterized in that** the control is configured to start concluding on the operability of the installation with a time delay after the pump is started, wherein the time delay is established based on the measured fluid temperature.

2. The heating and/or cooling installation as set forth in claims 1, wherein the time delay at a fluid temperature above approximately 7.5°C is between 13 and 17 sec., preferably approximately 15 sec, and below approximately 7.5°C is between 15 and 60 sec, depending on the fluid temperature.

3. The heating and/or cooling installation as set forth in claim 1 or 2, wherein the control is configured to compare an output of the flow switch (60) with a predetermined value and is configured to further conclude on operability of the flow switch based on the comparison.

4. The heating and/or cooling installation as set forth in any one of the preceding claims, wherein the flow condition is the flow rate.

5. A method for monitoring the operability of a heating and/or cooling installation comprising:
a fluid circuit (21, 22, 31, 34, 40),
a pump (27) circulating fluid in the fluid circuit, and a flow switch (60) being connected to the fluid circuit for detecting the flow condition of the circulated fluid, the method comprising the steps of:
comparing an output of the flow switch (60) with a predetermined value;
determining based on the comparison whether the installation is operative, and measuring the temperature of the fluid in the fluid circuit, **characterized in that** the comparison of the output and the predetermined value is started with a time delay after the pump (27) is started to conclude on the operability of the installation, the time delay being established based on the measured fluid temperature.

6. The method as set forth in claim 5, wherein the time delay at a measured fluid temperature above approximately 7.5°C is between 13 and 17 sec, preferably approximately 15 sec, and below approximately 7.5°C is between 15 and 60 sec, depending on the fluid temperature.

## Patentansprüche

1. Erwärmungs- und/oder Kühleinrichtung, aufweisend:
einen Fluidkreis (21, 22, 31, 34, 40),
eine Pumpe (27), die ein Fluid im Fluidkreis zirkulieren lässt,
einen Strömungsschalter (60), der zum Erfassen eines Strömungszustands des zirkulierten Fluids mit dem Fluidkreis verbunden ist, und
eine Steuerung, welche den erfassten Strömungszustand als eine Basis zum Rückschließen auf die Funktionsfähigkeit der Einrichtung verwenden kann, und
einen Temperatursensor (61) zum Messen der Temperatur des Fluids im Fluidkreis, **dadurch gekennzeichnet, dass** die Steuerung mit einer Zeitverzögerung mit dem Rückschließen auf die Funktionsfähigkeit der Einrichtung starten kann, nachdem die Pumpe gestartet wurde, wobei die Zeitverzögerung basierend auf der gemessenen Fluidtemperatur festgelegt wird.

2. Erwärmungs- und/oder Kühleinrichtung gemäß Anspruch 1, bei der die Zeitverzögerung abhängig von der Fluidtemperatur bei einer Fluidtemperatur oberhalb von ungefähr 7,5 °C zwischen 13 und 17 Sek. beträgt, bevorzugt ungefähr 15 Sek., und unterhalb von ungefähr 7,5 °C zwischen 15 und 60 Sek. beträgt.

3. Erwärmungs- und/oder Kühleinrichtung gemäß Anspruch 1 oder 2, bei der die Steuerung eine Ausgabe des Strömungsschalters (60) mit einem bestimmten Wert vergleichen kann und ferner basierend auf dem Vergleich auf die Funktionsfähigkeit der Einrichtung rückschließen kann.

4. Erwärmungs- und/oder Kühleinrichtung gemäß einem der vorangegangenen Ansprüche, bei der der Strömungszustand die Strömungsrate ist.

5. Verfahren zum Überwachen der Funktionsfähigkeit einer Erwärmungs- und/oder Kühleinrichtung, aufweisend:
einen Fluidkreis (21, 22, 31, 34, 40),
eine Pumpe (27), die ein Fluid im Fluidkreis zirkulieren lässt, und
einen Strömungsschalter (60), der zum Erfassen des Strömungszustands des zirkulierten Fluids mit dem Fluidkreis verbunden ist, wobei das Verfahren die Schritte aufweist:
Vergleichen einer Ausgabe des Strömungsschalters (60) mit einem bestimmten Wert,
Bestimmen basierend auf dem Vergleich, ob die Einrichtung funktionsfähig ist, und Messen der Temperatur des Fluids im Fluidkreis, **dadurch gekennzeichnet, dass** der Vergleich der Ausgabe und des bestimmten Werts mit einer Zeitverzögerung gestartet wird, nachdem die Pumpe (27) gestartet wurde, um auf die Funktionsfähigkeit der Einrichtung rückzuschließen, wobei die Zeitverzögerung basierend auf der gemessenen Fluidtemperatur festgelegt wird.

6. Verfahren gemäß Anspruch 5, bei dem die Zeitverzögerung abhängig von der Fluidtemperatur bei einer gemessenen Fluidtemperatur oberhalb von ungefähr 7,5 °C zwischen 13 und 17 Sek. beträgt, bevorzugt ungefähr 15 Sek., und unterhalb von ungefähr 7,5 °C zwischen 15 und 60 Sek. beträgt.

## Revendications

1. Installation de chauffage et/ou de refroidissement comprenant :
un circuit de fluide (21, 22, 31, 34, 40),
une pompe (27) faisant circuler un fluide dans le circuit de fluide,
un commutateur de flux (60) relié au circuit de fluide pour détecter une condition de flux du fluide circulé,
une commande configurée pour utiliser la condition de flux détectée comme base pour déduire une conclusion quant à l'opérabilité de l'installation, et
un capteur de température (61) destiné à mesurer la température du fluide dans le circuit de fluide **caractérisé en ce que** la commande est configurée pour commencer à déduire une conclusion quant à l'opérabilité de l'installation avec un retard suivant le démarrage de la pompe, où le retard est établi sur la base de la température mesurée du fluide.

2. Installation de chauffage et/ou de refroidissement selon la revendication 1, où le retard à une température de fluide dépassant 7,5°C environ se trouve entre 13 et 17 sec, de préférence 15 sec environ, et à une température inférieure à 7, 5°C environ se trouve entre 15 et 60 sec, selon la température du fluide.

3. Installation de chauffage et/ou de refroidissement selon la revendication 1 ou 2, où la commande est configurée pour comparer une sortie du commutateur de flux (60) à une valeur prédéterminée et est configurée pour déduire en outre une conclusion quant à l'opérabilité du commutateur de flux sur la base de la comparaison.

4. Installation de chauffage et/ou de refroidissement selon l'une quelconque des revendications précédentes, où la condition de flux du fluide est le débit.

5. Procédé de surveillance de l'opérabilité d'une installation de chauffage et/ou de refroidissement comprenant :
un circuit de fluide (21, 22, 31, 34, 40),
une pompe (27) faisant circuler un fluide dans le circuit de fluide, et
un commutateur de flux (60) qui est relié au circuit de fluide pour détecter la condition de flux du fluide circulé, le procédé comprenant les étapes qui consistent :
à comparer une sortie du commutateur de flux (60) à une valeur prédéterminée ;
à déterminer, sur la base de la comparaison, si l'installation est fonctionnelle, et à mesurer la température du fluide dans le circuit de fluide, **caractérisée en ce que** la comparaison de la sortie et de la valeur prédéterminée a démarré avec un retard suivant le démarrage de la pompe (27), pour déduire une conclusion quant à l'opérabilité de l'installation, le retard étant établi sur la base de la température mesurée du fluide.

6. Procédé selon la revendication 5, dans lequel le retard à une température mesurée du fluide dépassant 7,5°C environ se trouve entre 13 et 17 sec, de préférence de 15 sec environ, et à une température inférieure à 7,5°C environ est entre 15 et 60 sec, selon la température du fluide.
